# EUROPÄISCHE PATENTSCHRIFT

(11) **EP 1 293 420 B1**
(45) Veröffentlichungstag und Bekanntmachung des Hinweises auf die Patenterteilung: **21.06.2006**
(21) Anmeldenummer: 02020338.6
(22) Anmeldetag: 11.09.2002
(51) Int. Cl.: B62D 65/00

(54) **Durch eine Steuerkurve gesteuerter Hubtisch**
Lifting table controlled by a cam
Plateau élévateur contôlé par une came de commande

(30) Priorität: 13.09.2001 DE 10145238
(43) Veröffentlichungstag der Anmeldung: 19.03.2003
(73) Patentinhaber: Fördersysteme Engineering GmbH, 64293 Darmstadt (DE)
(72) Erfinder: Schaller, Helmuth, 64331 Weiterstadt (DE); Maack, Hans-Bernd, 64584 Biebesheim (DE); Proske, Hans, 64354 Reinheim (DE)
(74) Vertreter: Kewitz, Ansgar

(56) Entgegenhaltungen:
- DE-A- 3 136 934
- DE-A- 4 217 698

## Beschreibung

Die Erfindung betrifft eine Vorrichtung zur Steuerung von fahrbaren Hubtischen, wie sie in der Automobilindustrie eingesetzt werden.

In der Automobilindustrie werden Fahrzeuge kontinuierlich transportiert, indem die Karossen auf einem Skid bzw. einem selbstfahrenden Hubtisch angeordnet sind. Diese Skids werden in einer Schlange entweder fremdgesteuert geschoben oder weisen einen eigenen Antrieb auf und folgen sog. Pfaden in den Fabrikhallen.

Auf Grund unterschiedlicher Arbeitsgänge müssen die Karossen auf unterschiedliche Ebenen gehoben werden. Bisher erfolgte dies durch separate Antriebe, die in den Skids integriert sind. Bei diesen Antrieben handelt es sich vorzugsweise um Elektroantriebe oder hydraulische Antriebe, die wiederum über einen Elektromotor angetrieben werden. Nachteilig bei diesen Antrieben ist, dass sie eine ständige Leistungszufuhr benötigen. Weiterhin sind sie kostenintensiv und störanfällig.

Aus der DE 10011799.6 ist eine Vorrichtung bekannt, bei der der Hubtisch durch eine Steuerkurve, die im Randbereich des Skids angeordnet ist, ausgerichtet wird, wobei die zu hebenden Elemente des Hubtisches unmittelbar mit der Steuerkurve in Wirkverbindung stehen. Diese Steuerkurve hat jedoch den Nachteil, dass sie eine vertikale Auslenkung auf den Hubtisch überträgt. Durch die Steuerkurve wird auf Grund des großen Raumbedarfs oftmals ein Arbeitsplatz in Anspruch genommen. Ziel ist es nun, eine mechanische Steuerkurve bereitzustellen, die einen geringeren Platzbedarf hat.

Aus der Offenlegungsschrift DE 4217698 ist ein bewegbarer Tisch bekannt, der entlang einer Förderbahn transportiert wird. Im Gegensatz zu der vorliegenden Erfindung handelt es sich bei dieser Vorrichtung nicht um einen selbstfahrenden Hubtisch. Weiterhin erfolgt die Auslenkung durch eine Förderkurve, die vertikalen Veränderungen unterliegt. Nachteilig bei dieser Vorrichtung sind der hohe Platzbedarf unterhalb des Skids und die daraus resultierenden Probleme beim Umsetzen des Skids von einer Längs- zu einer Querförderung.

Aus der Druckschrift DE 4004853 ist ein Montagesystem für Automobile bekannt, das auf Rollen läuft und eine Hub- und Kippvorrichtung umfasst. Der Kipp- und Hubantrieb erfolgt jedoch durch einen Elektroantrieb, der über Kontaktbahnen mit Energie versorgt wird. Eine mechanische Steuerung liegt nicht vor. Die Verwendung von Kontaktbahnen führt jedoch zu einer Reihe von Problemen, wie Schutz der Mitarbeiter, Abnutzung und Kontaktproblemen.

Aus der Druckschrift DE 4002414 A1 sind ein Verfahren und eine Vorrichtung zum Transport von Gegenständen entlang einer Fertigungsstraße bekannt, wobei eine Steuerschiene parallel angeordnet ist und horizontale Ausrichtungen der Hubwagen vornimmt.

Aufgabe der Erfindung ist es, eine Vorrichtung bereitzustellen, die selbstständig rollend ist und deren Hub durch einen einfachen mechanischen Mechanismus gesteuert wird. Weiterhin soll der Hub flexibel sein und durch raumsparende Mittel erfolgen.

Diese Aufgabe wird durch die Erfindungen gemäß den Merkmalen der unabhängigen Ansprüchen gelöst. Vorteilhafte Weiterbildungen der Erfindungen werden in den Unteransprüchen beschrieben.

Insbesondere wird die Aufgabe durch einen Hubtisch gelöst, der fahrbar ausgebildet ist. In der Automobilindustrie werden diese fahrbaren Hubtische Skids genannt. Diese Skids weisen in der Regel Rollen auf, auf denen sie durch Fertigungshallen geschoben werden. In Einzelfällen haben diese Skids einen eigenen Antrieb. Dieser Antrieb ist ein Elektromotor, der durch Schleifkontakte mit Strom versorgt wird. Die Rollen sind regelmäßig an einem Grundrahmen befestigt. Auf dem Grundrahmen ist ein Hubrahmen angeordnet, der über Hubelemente, vorzugsweise in Form einer Hubschere, mit dem Grundrahmen verbunden ist. Eine Hubschere ermöglicht einen einfachen und stabilen mechanischen Hubvorgang. Durch ein Führungselement, das unterhalb des Hubrahmens angeordnet ist und das durch eine auf einem Boden befestigte Steuerkurve ausgelenkt wird, wird der Hubtisch ausgerichtet. Bei diesem Führungselement handelt es sich vorzugsweise um einen Kniehebel, der am Grundrahmen angelenkt ist. Es ist jedoch auch denkbar, andere Baugruppen zu verwenden, die auf einer horizontalen Ebene ausgelenkt werden. Diese können z. B. über Ketten oder andere Antriebe mit der für den Hubvorgang vorgesehenen Baugruppe verbunden sein. Die durch das Führungselement aufgenommene Energie wird durch weitere Mittel, die vorzugsweise mechanisch ausgebildet sind, in eine Hubenergie umgewandelt. Somit wird die auf einer horizontalen Ebene aufgenommene Kraft in eine Kraft umgesetzt, die eine vertikale Ausrichtung hat. Bei diesen Elementen handelt es sich vorzugsweise um Hebel und Gestänge sowie einen Kraftumlenkhebel.

Der Kniehebel steht in einer bevorzugten Ausführungsform über eine Steuerrolle mit der Steuerkurve in Verbindung. Durch die Verwendung einer Steuerrolle wird sichergestellt, dass der Verschleiß nicht zu groß ist und dass eine exakte Ausrichtung des Hubtisches sichergestellt wird. Die Steuerrolle ist in der Regel kugelgelagert.

In einer weiteren Ausführungsform werden zwei, vorzugsweise parallel arbeitende Führungselemente, die unterhalb des Hubrahmens angeordnet sind und die durch zwei auf dem Boden befestigte Steuerkurven ausgelenkt werden, verwendet. Die Steuerkurven sind dabei spiegelbildlich angeordnet, wobei der Spiegelpunkt zwischen den beiden Steuerkurven liegt. Durch diese parallele Verwendung heben sich die durch die Umlenkung entstehenden Kräfte auf. Durch ein Gelenk, das die beiden Hebelgruppen miteinander verbindet, wird die Energie auf einen gemeinsamen Kraftumlenkhebel gelenkt. Der Kraftumlenkhebel ist so ausgebildet, dass er die Kräfte des durch die Steuerkurve ausgelenkten Kniehebels ausgewogen auf den Hubrahmen verteilt.

Ein weiterer Bestandteil der vorliegenden Erfindung ist die Steuerkurve, die mit Hilfe eines Befestigungsrasters auf dem Boden befestigt ist. Dieses Raster, das zwischen Boden und Steuerkurve angeordnet ist, ermöglicht die variable Anordnung und leichte Positionierung der Steuerkurve. Das Befestigungsraster weist eine Vielzahl von symmetrisch angeordneten Bohrungen auf.

Die mechanische Zwangsführung der Führungselemente macht es im Einzelfall schwierig, die Skids aus der Führung zu entfernen, oder die Hubfunktion zu unterbinden.

Hierfür weist die Steuerkurve einfügbare und entfernbare Segmente auf, die durch eine, vorzugsweise mechanische, Führung eingefügt und entfernt werden können. Die Führung ist so ausgebildet, dass sie manuell, durch einen Motorantrieb, einen Pneumatikantrieb oder einen Hydraulikantrieb gesteuert wird. Die Segmente werden so durch die Führung aus der Steuerkurve entfernt, dass die Steuerrollen keinen Kontakt in diesem Bereich mit der Steuerkurve haben. Diese Führung kann eine Schiene sein, die vorzugsweise in einem rechten Winkel zur Steuerkurve angeordnet ist und auf der das Segment der Steuerkurve gleitend angeordnet ist. Das Segment der Steuerkurve kann jedoch auch so ausgebildet sein, dass lediglich die Seitenwände, die die Steuerrolle kontaktiert, umgeklappt werden. Hierfür wird in der Regel ein Scharnier verwendet, das das Umklappen ermöglicht.

Die entfernbaren und einfügbaren Segmente der Steuerkurve sind in einer Ausführungsform so angeordnet, dass das Führungselement des Hubtisches in der Ruheposition bei geöffnetem Segment nicht ausgelenkt wird. Der Hubtisch gleitet somit über eine Strecke hinweg, ohne dass dabei der Hubrahmen auf- oder abbewegt wird.

Ein weiterer Bestandteil der vorliegenden Erfindung ist eine vollständige Fertigungsstraße, die einen oder mehrere der fahrbaren Hubtische aufweist, und die durch die erfindungsgemäßen Steuerkurven gesteuert werden.

Im Folgenden wird die Erfindung anhand von Ausführungsbeispielen näher erläutert, die in den Figuren schematisch dargestellt sind. Im Einzelnen zeigt:
- Fig. 1: die Seitenansicht eines Skids mit einem Grundrahmen und einem Hubrahmen, wobei der Skid auf Rollen gelagert ist,
- Fig. 1a: die Draufsicht auf einen Skid, der zwei parallel angeordnete Kniehebel aufweist, die am Grundrahmen angelenkt sind, und die über Lenker und ein Gelenklager mit dem Kraftumlenkhebel verbunden sind;
- Fig. 2: die Draufsicht auf einen Skid, der nur einen Kniehebel umfasst, wobei der Kniehebel am Grundrahmen befestigt ist und über ein Lenkerelement mit dem Kraftumlenkhebel verbunden ist;
- Fig. 3: eine Draufsicht auf die Steuerkurven sowie ihre variable Befestigung und den möglichen Verlauf der Steuerrollen sowie des entsprechenden Kniehebels;

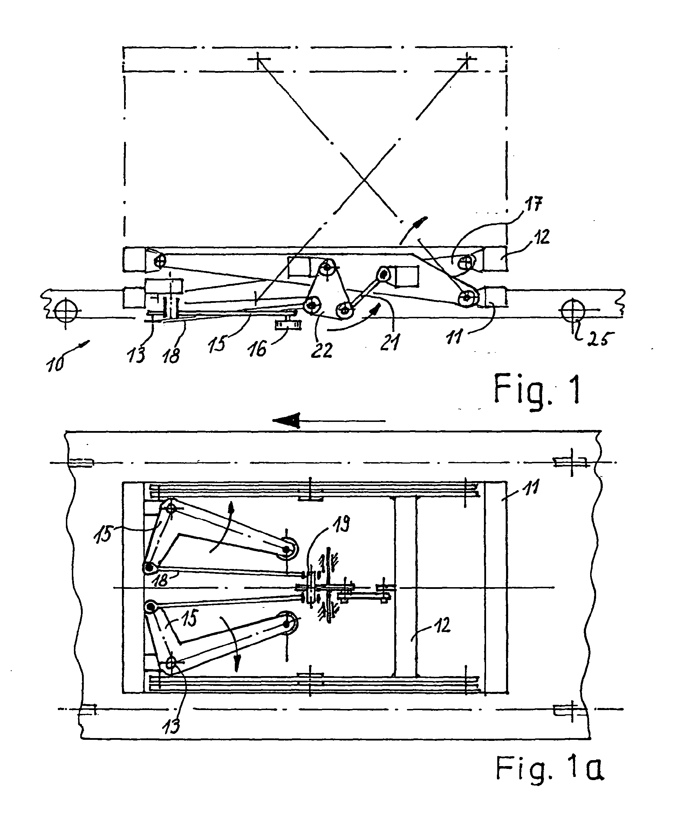

Figur 1 zeigt einen Skid 10, der mit schematisch dargestellten Rollen 25, mit einem Grundrahmen 11 und einem Hubrahmen 12, die über Hubscheren 17 miteinander verbunden sind, ausgebildet ist. Weiterhin ist ein Kniehebel 15 in seinem Scheitelpunkt 13 an den Grundrahmen 11 angelenkt. Der Kniehebel 15 ist unterhalb des Grundrahmens angeordnet und weist an seinem einen Ende eine Steuerrolle 16 auf, und an seinem anderen Ende ist er mit einem Lenker 18 verbunden, der wiederum mit dem Kraftumlenkhebel 22 in Kontakt steht. Der Kraftumlenkhebel weist drei Gelenke auf, wobei ein Gelenk am Hubrahmen befestigt ist, das zweite Gelenk mit dem Lenker 18 verbunden ist und das dritte Gelenk mit einem Hebelelement 21 verbunden ist, das wiederum mit dem Hubrahmen in Verbindung steht. Durch das Hebelelement 21 wird eine gleichmäßige Verteilung der Kraft auf den Hubrahmen sichergestellt.

Weiterhin zeigt die Figur durch einen entsprechenden Pfeil den schematischen Bewegungsverlauf des Kraftumlenkhebels und seines Hebelelementes sowie der Schere, wenn der Hubrahmen auf Grund der Veränderung der Position des Kniehebels angehoben wird.

Figur 1a zeigt weiterhin ein Ausführungsbeispiel mit zwei Kniehebeln, die spiegelbildlich am Grundrahmen angelenkt sind.

Die Kniehebel sind über zwei Lenker 18 mit Hilfe eines Gelenklagers 19 mit dem Kraftumlenkhebel 22 verbunden.

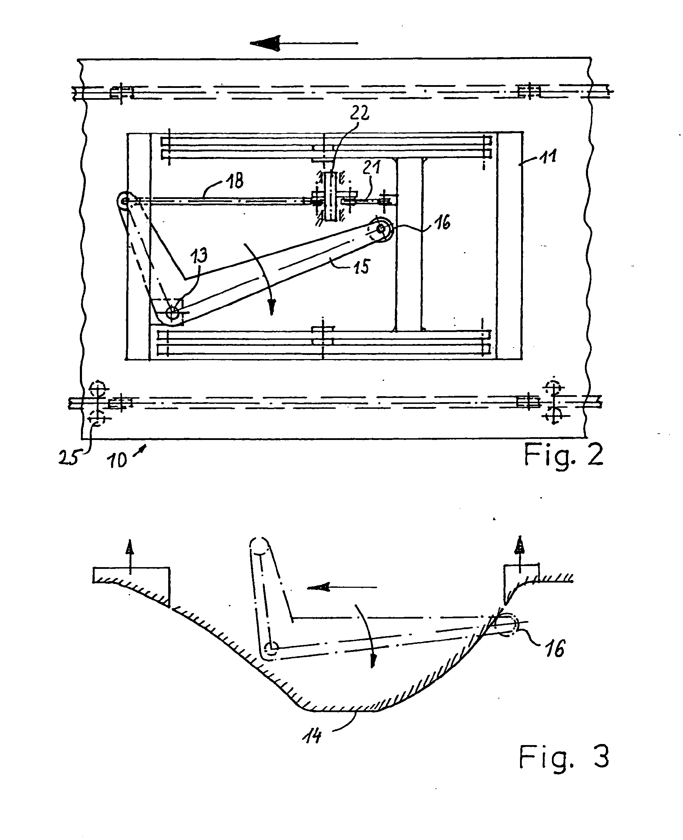

Aus der Figur 2 ist ein Ausführungsbeispiel ersichtlich, das lediglich einen Kniehebel 15 aufweist. Ferner ist bei dieser Figur eine Laufräderbefestigung 25 offenbart, die mit dem Grundrahmen 11 verbunden ist.
Die Figur 3 zeigt den Aufbau von Steuerkurven, wobei es sich um eine Steuerkurve für einen Skid mit lediglich einem Kniehebel handelt. Weiterhin sind der Figur 3, durch Pfeile gekennzeichnete, entfernbare und einfügbare Steuerkurvensegmente zu entnehmen, die am Anfang und am Ende einer ausgedehnten Auslenkung angeordnet sind. Sollte eine Führung die Steuerkurvensegmente aus ihrer ursprünglichen Position entfernen, so wird die Steuerrolle 16 nicht ausgelenkt und läuft einfach durch den sich öffnenden Kanal. Die Steuerkurvensegmente werden auf ihrer Führung vorzugsweise durch einen Spindelantrieb bewegt. Es ist jedoch auch denkbar, die Steuerkurvensegmente manuell mit Hilfe eines Hebels aus ihrer Standardposition zu bewegen. Es wird darauf hingewiesen, dass andere Antriebe ebenfalls vorstellbar sind.

Über ein nicht dargestelltes Befestigungsraster können die Steuerkurven variabel in justierbaren Abständen befestigt werden. Das Befestigungsraster weist vorzugsweise eine Vielzahl von Bohrungen bzw. Langlöchern auf, die zur Befestigung der Steuerkurve dienen. Somit besteht kein unmittelbarer Kontakt mit dem Boden, wodurch einfache Anpassungen möglich sind, ohne große Bohrarbeiten vorzunehmen.

### Bezugszeichen

- 10: Skid, fahrbare Plattform
- 11: Grundrahmen
- 12: Hubrahmen
- 13: Scheitelpunkt
- 14: Steuerkurve
- 15: Kniehebel
- 16: Steuerrolle
- 17: Hubschere
- 18: Lenker
- 19: Gelenklager
- 20:
- 21: Hebelelement
- 22: Kraftumlenkhebel
- 23:
- 24:
- 25: Rollen

## Patentansprüche

1. Hubtisch mit Rollen, insbesondere ein Skid für die Automobilindustrie, mit einem Grundrahmen und einem Hubrahmen, der über Hubelemente, insbesondere eine Hubschere, mit dem Grundrahmen verbunden ist, **dadurch gekennzeichnet, dass** über ein horizontal auslenkbares Führungselement (15), das durch eine auf einem Boden befestigte Steuerkurve (14) auf einer horizontalen Ebene auslenkbar ist, weitere mechanische Mittel (16, 18, 21, 22) so gesteuert werden, dass der Hubrahmen (12) in Abhängigkeit von der horizontalen Auslenkung des Führungselementes (15) gehoben und/oder gesenkt wird.

2. Hubtisch nach dem vorhergehenden Anspruch, **dadurch gekennzeichnet, dass** das horizontal auslenkbare Führungselement unterhalb des Hubrahmens angeordnet ist.

3. Hubtisch nach einem oder mehreren der vorhergehenden Ansprüche, **dadurch gekennzeichnet, dass** das Führungselement ein Kniehebel (15) ist, der über eine Steuerrolle (16) mit der Steuerkurve (14) in Wirkverbindung steht, um den Hubrahmen (12) über weitere Mittel (16, 18, 21, 22) auszurichten.

4. Hubtisch nach einem oder mehreren der vorhergehenden Ansprüche, **dadurch gekennzeichnet, dass** der Kniehebel (15) am Grundrahmen (11) angelenkt ist und über einen Lenker (18) und einen Kraftumlenkhebel (22) mit dem Hubrahmen (12) verbunden ist.

5. Hubtisch nach einem oder mehreren der vorhergehenden Ansprüche, **gekennzeichnet durch** zwei, die unterhalb des Hubrahmens angeordnet sind, und die **durch** zwei auf dem Boden befestigte Steuerkurven (14) auslenkbar sind.

6. Hubtisch nach dem vorhergehenden Anspruch, **dadurch gekennzeichnet, dass** die Führungselemente über weitere mechanische Mittel (16, 18, 21, 22, 19) auf einen gemeinsamen Kraftumlenkhebel (22) wirken.

7. Hubtisch nach einem oder mehreren der vorhergehenden Ansprüche, **dadurch gekennzeichnet, dass** der Kraftumlenkhebel (22) so ausgebildet ist, dass er die Kräfte des durch die Steuerkurve ausgelenkten Kniehebels (15) ausgewogen auf den Hubrahmen (12) verteilt.

8. Steuerkurve zur Steuerung eines Hubrahmens, der Bestandteil eines Hubtisches nach einem oder mehreren der vorhergehenden Hubtischansprüche ist, **dadurch gekennzeichnet, dass** ein Befestigungsraster zwischen Steuerkurve (14) und Boden angeordnet ist, das eine variable Befestigung der Steuerkurve (14) mit dem Befestigungsraster ermöglicht.

9. Steuerkurve nach dem vorhergehenden Anspruch, **dadurch gekennzeichnet, dass** das Befestigungsraster eine Vielzahl von symmetrisch angeordneten Bohrungen aufweist.

10. Steuerkurve zur Steuerung eines Hubrahmens, der Bestandteil eines Hubtisches nach einem oder mehreren der vorhergehenden Hubtischansprüche ist, **gekennzeichnet durch** einfügbare und entfernbare Segmente in der Steuerkurve, die **durch** eine Führung eingefügt und entfernt werden können.

11. Steuerkurve nach dem vorhergehenden Anspruch, **dadurch gekennzeichnet, dass** die Führung so ausgebildet ist, dass sie manuell, durch einen Motorantrieb, einen Pneumatikantrieb oder einen Hydraulikantrieb steuerbar ist.

12. Steuerkurve nach einem oder mehreren der vorhergehenden Steuerkurvenansprüche, **dadurch gekennzeichnet, dass** die entfernbaren und einfügbaren Segmente der Steuerkurve so angeordnet sind, dass Führungselemente (15) des Hubtisches in der Ruheposition bei geöffnetem Segment nicht ausgelenkt werden.

13. Fertigungsstraße, insbesondere für die Produktion von Kraftfahrzeugen, **gekennzeichnet durch** einen oder mehrere der fahrbaren Hubtische nach einem oder mehreren der vorhergehenden Hubtischansprüchen.

14. Fertigungsstraße nach dem vorhergehenden Fertigungsstraßenanspruch, **dadurch gekennzeichnet, dass** eine Steuerkurve nach einem oder mehreren der vorhergehenden Steuerkurvenansprüchen verwendet wird.

## Claims

1. Lifting platform with rollers, in particular a skid for the automotive industry, comprising a base frame and a lifting frame which is connected to the base frame via lifting elements, in particular a scissors-type jack, **characterised in that**, by means of a horizontally movable guide element (15) which can be moved on a horizontal plane by a control cam (14) fixed to a floor, further mechanical means (16, 18, 21, 22) are controlled in such a way that the lifting frame (12) is raised and/or lowered as a function of the horizontal movement of the guide element (15).

2. Lifting platform according to the preceding claim, **characterised in that** the horizontally movable guide element is arranged below the lifting frame.

3. Lifting platform according to one or more of the preceding claims, **characterised in that** the guide element is a toggle lever (15) which is actively connected to the control cam (14) via a control roller (16) in order to adjust the lifting frame (12) via further means (16, 18, 21, 22).

4. Lifting platform according to one or more of the preceding claims, **characterised in that** the toggle lever (15) is articulated on the base frame (11) and is connected to the lifting frame (12) via a connecting rod (18) and a force deflection lever (22).

5. Lifting platform according to one or more of the preceding claims, **characterised by** two guide elements which are arranged below the lifting frame and which can be moved by two control cams (14) fixed to the floor.

6. Lifting platform according to the preceding claim, **characterised in that** the guide elements act on a common force deflection lever (22) via further mechanical means (16, 18, 21, 22, 19).

7. Lifting platform according to one or more of the preceding claims, **characterised in that** the force deflection lever (22) is designed in such a way that it distributes the forces of the toggle lever (15) moved by the control cam onto the lifting frame (12) in a balanced manner.

8. Control cam for controlling a lifting frame which forms part of a lifting platform according to one or more of the preceding lifting platform claims, **characterised in that** a fixing grid is arranged between the control cam (14) and the floor, which allows variable fixing of the control cam (14) to the fixing grid.

9. Control cam according to the preceding claim, **characterised in that** the fixing grid has a plurality of symmetrically arranged holes.

10. Control cam for controlling a lifting frame which forms part of a lifting platform according to one or more of the preceding lifting platform claims, **characterised by** insertable and removable segments in the control cam, which can be inserted and removed by means of a guide.

11. Control cam according to the preceding claim, **characterised in that** the guide is designed in such a way that it can be controlled manually, by means of a motor drive, a pneumatic drive or a hydraulic drive.

12. Control cam according to one or more of the preceding control cam claims, **characterised in that** the removable and insertable segments of the control cam are arranged in such a way that guide elements (15) of the lifting platform in the rest position are not moved when the segment is open.

13. Production line, in particular for the production of motor vehicles, **characterised by** one or more of the movable lifting platforms according to one or more of the preceding lifting platform claims.

14. Production line according to the preceding production line claim, **characterised in that** use is made of a control cam according to one or more of the preceding control cam claims.

## Revendications

1. Plateau élévateur avec roues, particulièrement une plateforme de manutention pour l'industrie automobile avec un châssis de base et un châssis de levage qui est relié par des éléments élévateurs, particulièrement des ciseaux de levage, au châssis de base, **caractérisé en ce que** par un élément de guidage horizontal pouvant être dévié (15) qui peut être dévié sur un plan horizontal par une courbe de commande (14) fixée sur un sol, d'autres moyens mécaniques (16, 18, 21, 22) sont ainsi commandés que le châssis élévateur (12) peut être levé et/ou baissé en fonction de la déviation horizontale de l'élément de guidage (15).

2. Plateau élévateur selon la revendication précédente, **caractérisé en ce que** l'élément de guidage horizontal pouvant être dévié est disposé en dessous du châssis élévateur.

3. Plateau élévateur selon l'une ou plusieurs des revendications précédentes, **caractérisé en ce que** l'élément de guidage est un levier à genouillère (15) qui est en interaction avec la courbe de commande (14) par un rouleau de commande (16) afin d'aligner le châssis élévateur (12) par d'autres moyens (16, 18, 21, 22).

4. Plateau élévateur selon l'une ou plusieurs des revendications précédentes, **caractérisé en ce que** le levier à genouillère (15) est articulé sur le châssis de base (11) et relié au châssis élévateur (12) par un bras articulé (18) et un levier de renvoi de force (22).

5. Plateau élévateur selon l'une ou plusieurs des revendications précédentes, **caractérisé par** deux éléments de guidage disposés en dessous du châssis élévateur et pouvant être déviés par des courbes de commande (14) fixées sur le sol.

6. Plateau élévateur selon la revendication précédente, **caractérisé en ce que** les éléments de guidage agissent sur un levier de renvoi de force (22) commun par d'autres moyens mécaniques (16, 18, 21, 22, 19).

7. Plateau élévateur selon l'une ou plusieurs des revendications précédentes, **caractérisé en ce que** le levier de renvoi de force (22) est formé de manière à ce qu'il répartisse les forces du levier à genouillère (15) dévié par la courbe de commande de manière pondérée sur le châssis élévateur (12).

8. Courbe de commande pour commander un châssis élévateur qui est une composante d'un plateau élévateur selon l'une ou plusieurs des revendications de plateau élévateur précédentes, **caractérisée en ce qu'**une trame de fixation est disposée entre la courbe de commande (14) et le sol et permet une fixation variable de la courbe de commande (14) avec la trame de fixation.

9. Courbe de commande selon la revendication précédente, **caractérisée en ce que** la trame de fixation présente une pluralité d'alésages disposés symétriquement.

10. Courbe de commande pour commander un châssis élévateur qui est une composante d'un plateau élévateur selon l'une ou plusieurs des revendications de plateau élévateur précédentes, **caractérisée par** des segments insérables et retirables dans la courbe de commande qui peuvent être insérés et retirés par un guidage.

11. Courbe de commande selon la revendication précédente **caractérisée en ce que** le guidage est formé de manière à ce qu'il puisse être commandé manuellement par un entraînement de moteur, un entraînement pneumatique ou un entraînement hydraulique.

12. Courbe de commande selon l'une ou plusieurs des revendications de courbe de commande précédentes, **caractérisée en ce que** les segments insérables et retirables de la courbe de commande sont disposés de telle façon que des éléments de guidage (15) du plateau élévateur en position de repos ne soient pas déviés avec le segment ouvert.

13. Ligne de fabrication, particulièrement pour la production de véhicules automobiles, **caractérisée par** un ou plusieurs des plateaux élévateurs déplaçables selon l'une ou plusieurs des revendications de plateau élévateur précédentes.

14. Ligne de fabrication selon la revendication de fabrication précédente, **caractérisée en ce qu'**une courbe de commande est employée selon l'une ou plusieurs des revendications de courbe de commande précédentes.
